Europäisches Patentamt

European Patent Office

Office européen des brevets

(11) Veröffentlichungsnummer: **0 020 918**
A1

## (12) EUROPÄISCHE PATENTANMELDUNG

(21) Anmeldenummer: 80102145.2

(22) Anmeldetag: 22.04.80

(51) Int. Cl.³: **G 03 B 15/05, F 21 V 9/10**

(30) Priorität: 21.06.79 DE 2924956

(43) Veröffentlichungstag der Anmeldung: 07.01.81
Patentblatt 81/1

(84) Benannte Vertragsstaaten: **AT BE CH FR GB IT LI LU NL SE**

(71) Anmelder: **Rollei-Werke Franke & Heidecke GmbH + Co KG, Salzdahlumer Strasse 196, D-3300 Braunschweig (DE)**

(72) Erfinder: **Proske, Joachim, Am Hasengarten 41, D-3300 Braunschweig (DE)**

(74) Vertreter: **Pretzell, Hellmut, Dipl.-Ing., Salzdahlumer Strasse 196, D-3300 Braunschweig (DE)**

(54) Reflektor für verschiedene Ausleuchtwinkel.

㊲ Dieser Reflektor ist dadurch gekennzeichnet, dass im Lichtaustrittsbereich eine steuerbare Einrichtung (14) zur Änderung der Lichtverteilung vorgesehen ist. Diese kann eine steuerbare Streu-Charakteristik (c) aufweisen.

Die steuerbare Einrichtung kann eine oder mehrere Flüssigkristallzellen aufweisen.

EP 0 020 918 A1

ROLLEI-WERKE
Franke & Heidecke GmbH & CO KG
Braunschweig

## REFLEKTOR FÜR VERSCHIEDENE AUSLEUCHTWINKEL

Es sind Reflektoren bekannt, welche Einrichtungen zum
Einsetzen von Streuscheiben aufweisen, welche den Ausleuchtwinkel des Reflektors bestimmen. Diese bekannten Vorrichtungen weisen den Nachteil auf, daß der Benutzer stets eine Anzahl verschiedener Streuscheiben
zur Hand haben und auch stets eine andere Streuscheibe
anbringen muß, wenn er den Ausleuchtwinkel ändern will.

Es sind ferner Reflektoren bekannt, deren Ausleuchtwinkel durch mechanische Änderung ihrer Lage relativ zu
ihrer Lichtquelle veränderbar sind. Diese Vorrichtungen weisen zum einen den Nachteil auf, daß sie aufwendige mechanische Einrichtungen zur notwendigen geometrischen Lageveränderung erfordern. Zum anderen weisen
sie den Nachteil auf, daß mit der Lageveränderung die
Gleichmäßigkeit der Ausleuchtung verändert wird, so daß diese

2

Vorrichtungen für die meisten Ausleuchtwinkel unbefriedigend arbeiten.

Aufgabe der Erfindung ist es, einen Reflektor zu
schaffen, der ohne mechanisches Auswechseln von Bauteilen und bei festbleibender Anordnung relativ zu
seiner Lichtquelle für verschiedene Ausleuchtwinkel
verwendbar ist.

Diese Aufgabe ist gemäß der Erfindung dadurch gelöst,
daß im Lichtaustrittsbereich eine steuerbare Einrichtung zur Änderung der Lichtverteilung vorgesehen ist.

Mit der Erfindung werden die Vorteile erzielt, daß
keine zusätzlichen, auszutauschenden Bauteile erforderlich sind und daß die Vorrichtung stets mit optimalem Wirkungsgrad arbeiten kann. Darüber hinaus weist
die Erfindung den Vorteil auf, daß die Ausleuchtung
kontinuierlich und auch innerhalb kürzester Zeit veränderbar ist.

Nach einer bevorzugten Ausführungsform der Erfindung
weist die Einrichtung zur Änderung der Lichtverteilung
eine steuerbare Streu-Charakteristik auf.

Diese Einrichtung kann vorzugsweise eine Flüssigkristallzelle sein.

Nach einer Weiterbildung der Erfindung ist diese Flüssigkristallzelle mit der Frontscheibe des Reflektors verbunden.

3

Nach einer anderen, bevorzugten Ausführungsform der
Erfindung ist die Flüssigkristallzelle als Frontscheibe ausgebildet.

Durch Verwendung einer Flüssigkristallzelle als Frontscheibe eines Reflektors wird der Vorteil erzielt, daß
die Änderung des Ausleucht- oder Ausstrahlungswinkels
durch Änderung der an der Flüssigkristallzelle anliegenden elektrischen Spannung variiert werden kann.

Als Flüssigkristallzelle kann der Typ der nematischen
Zelle verwendet werden, wobei dessen Effekt der "dynamischen Streuung" ausgenutzt wird. Dieser Effekt wird
bei nematischen Flüssigkristallen mit einer negativen,
dielektrischen Anisotropie und einem spezifischen Widerstand zwischen etwa $10^9$ und $10^{13} \, \Omega$ cm beobachtet.
Dieser Effekt ist oberhalb einer definierten Schwellspannung als diffuse Lichtstreuung erkennbar.

Unterhalb der Schwellspannung ist die Flüssigkristallzelle transparent. Bei Erhöhung der anliegenden Steuerspannung auf und über den Wert der Schwellspannung hinaus
geht die Flüssigkristallzelle in ihren streuenden Zustand über, wobei die Stärke der Streuwirkung von der
Stärke der Steuerspannung abhängt. Durch Veränderung
der Steuerspannung oberhalb des Wertes der Schwellspannung
ist deshalb das Abstrahlungsverhalten der Reflektoranordnung steuerbar und wahlweise einstellbar.

Die Erfindung umfaßt beliebige Reflektoren. Bei sehr
großen Reflektoren kann die Frontscheibe mehrere Flüssigkristallzellen enthalten.

4

Die Erfindung ermöglicht insbesondere die Herstellung von Elektronenblitzgeräten mit einstellbaren Ausleuchtwinkeln. Gerade bei Elektronenblitzgeräten,
welche ebenfalls in den Schutzumfang der Erfindung
fallen, weist die Erfindung den besonderen Vorteil
auf, daß die Einrichtung zur Erzeugung der Steuerspannung
mit der Brennweite des verwendeten Objektives koppelbar ist. Dies gilt sowohl für die Änderung der Brennweite bei Vario-Objektiven als auch beim Auswechseln
von Objektiven mit Festbrennweiten. Insbesondere kann bei
Kameras mit Vario-Objektiven die geometrische Verschiebung bei der Änderung der Entfernungseinstellung
auf den Abgriff eines Potentiometers übertragen werden, von welchem die Steuerspannung abgegriffen wird.

Die Erfindung ist im folgenden anhand eines Ausführungsbeispiels und in Verbindung mit der Zeichnung näher beschrieben. Es zeigen:

Fig. 1    einen schematischen Längsschnitt durch
          einen Reflektor mit einer Flüssigkristallzelle als Frontscheibe,

Fig. 2    verschiedene Ausleuchtkurven, und

Fig. 3    getriebliche und elektrische Verbindungen
          zwischen Vario-Reflektor und Vario-Objektiv.

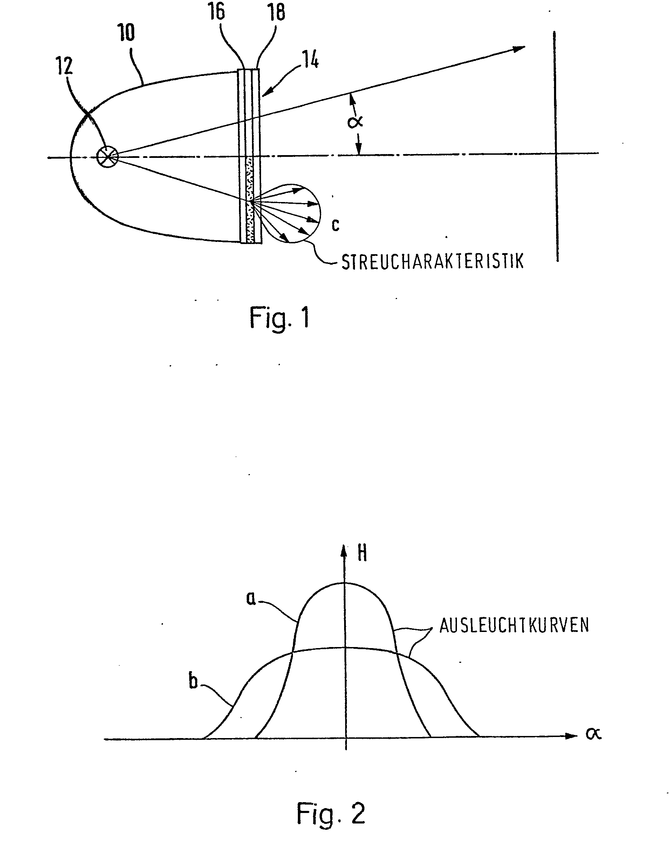

Der Vario-Reflektor für ein Elektronenblitzgerät der
Fig. 1 umfaßt im wesentlichen einen Reflektorabschnitt 10,
welcher eine Blitzröhre 12 umgibt und an seiner Vorder-

5

seite durch eine Frontscheibe 14 abgedeckt ist, welche
als Flüssigkristallzelle ausgebildet ist. Diese Flüssigkristallzelle ist über durchsichtige Elektroden 16 und
18 steuerbar. Die Flüssigkristallzelle ist vom Typ der
nematischen Zelle mit einer negativen dielektrischen
Anisotropie und einem spezifischen Widerstand zwischen
$10^9$ und $10^{13}$ $\Omega$ cm.

Wenn die zwischen den Steuerelektroden 16 und 18 liegende Spannung unterhalb eines Schwellwertes liegt, befindet sich die Flüssigkristallzelle in ihrem transparenten
Zustand, wie es in der Fig. 1 oberhalb des horizontalen
Reflektormittelachse dargestellt ist. Wenn die zwischen
den Steuerelektroden 16 und 18 liegende Steuerspannung
den genannten Schwellwert überschritten hat, geht die
Flüssigkristallzelle in ihren streuenden Zustand über,
wie es unterhalb der horizontalen Reflektormittelachse
in Fig. 1 schematisch angedeutet ist. In Fig. 2 ist die
Belichtung H in Abhängigkeit von dem Ausleuchtwinkel $\alpha$ für zwei Ausleuchtkurven a und b dargestellt.
Die Ausleuchtkurve a zeigt die Lichtverteilungskurve des
Vario-Reflektors mit transparenter Frontscheibe. Die Ausleuchtkurve b zeigt die Lichtverteilung des Vario-Reflektors
mit einer im diffusen, streuenden Zustand befindlichen
Flüssigkristallzelle.

Die Ausleucht- oder Lichtverteilungskurve des Reflektors
ist bei transparenter Frontscheibe schmaler und höher als
die Ausleuchtkurve bei streuender Frontscheibe. Wie man
diesen beiden Figuren entnehmen kann, ist diese Veränderung  in einfacher Weise durch Änderung der elektrischen

6

Steuerspannung möglich, ohne daß sich die Lage der
Blitzröhre 12 relativ zum Reflektor 10 ändern würde.

Diese variable Änderung der Ausleuchtkurven ist
kontinuierlich und stufenlos durchführbar, da die
elektrische Spannung stufenlos veränderbar ist.
Ferner ist diese Änderung der Ausleuchtkurven besonders schnell durchführbar, da auch die elektrische Steuerspannung leicht und schnell veränderbar
ist, z.B. mit Hilfe eines einstellbaren Potentiometers.

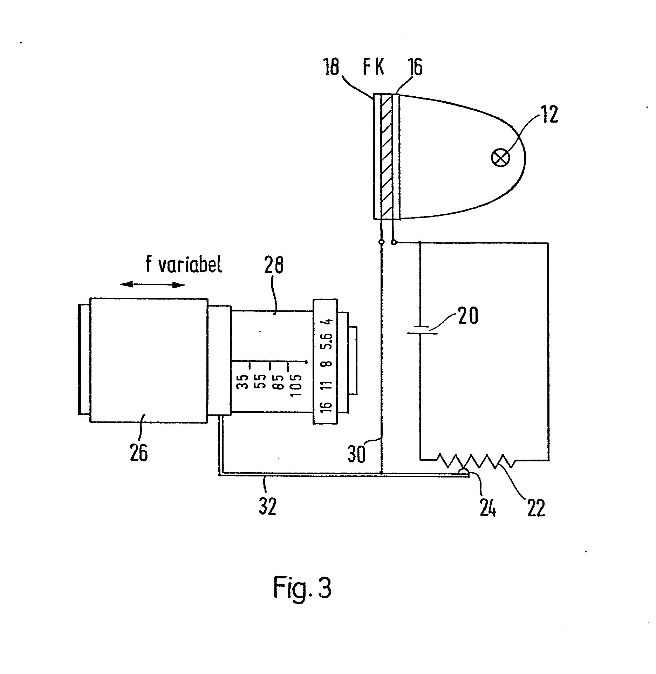

In Fig. 3 ist in schematischer Weise eine getriebliche
und elektrische Verbindung zwischen Vario-Reflektor und
einem Vario-Objektiv dargestellt.

Die Steuerelektrode 16 der Flüssigkristallzelle FK ist
bei diesem Ausführungsbeispiel direkt mit dem Pol einer
Gleichspannungsbatterie 20 verbunden, welche über einen
Widerstand 22 mit seinem anderen Pol verbunden ist. An
dem Widerstand 22 ist ein Mittelabgriff 24 verschiebbar
angeordnet, welcher über ein Gestänge 32 mit dem Tubus 26
eines Vario-Objektives verbunden ist.
Der verschiebbare Mittelabgriff 24 ist über eine Leitung 30
mit der anderen Steuerelektrode 18 der Flüssigkristallzelle FK verbunden.

Wenn der Tubus 26 des Vario-Objektives für Teleaufnahmen
weit hereingefahren wird, verschiebt sich der Mittelabgriff 24 dieser Potentiometerschaltung in Fig. 3 nach
rechts, wobei die zwischen den Steuerelektroden 16 und 18 liegende Steuerspannung verringert wird und die
Flüssigkristallzelle zunehmend transparenter wird
oder in ihren völlig klaren Zustand übergeht. Wird
dagegen der Tubus herausgefahren, so gleitet der
Mittelabgriff 24 der Potentiometerschaltung auf dem
Widerstand 22 weiter nach links, wobei gleichzeitig zunehmend die zwischen den Steuerlektroden 16 und
18 liegende Steuerspannung der Flüssigkristallzelle
wächst, was zur Folge hat, daß diese - nach Überschreitung der Schwellspannung - in einen zunehmend
stärker streuenden, diffusen Zustand übergeht.

Anhand der Figuren wurden lediglich einige Ausführungsbeispiele der Erfindung beschrieben, ohne deren
Schutzumfang einzuengen. Modifikationen dieser Ausführungsbeispiele und andere Anwendungsmöglichkeiten
der Erfindung fallen in den Schutzumfang dieser Anmeldung.

0020918

ROLLEI-WERKE
Franke & Heidecke GmbH & CO KG
Braunschweig

REFLEKTOR FÜR VERSCHIEDENE AUSLEUCHTWINKEL

ANSPRÜCHE

1. Reflektor für verschiedene Ausleuchtwinkel, dadurch gekennzeichnet, daß im Lichtaustrittsbereich eine steuerbare Einrichtung (14) zur Änderung der Lichtverteilung vorgesehen ist.

2. Reflektor nach Anspruch 1, dadurch gekennzeichnet, daß die
   Einrichtung (14) zur Änderung der Lichtverteilung eine steuerbare Streu-Charakteristik (c) aufweist.

3. Reflektor nach Anspruch 2, dadurch gekennzeichnet, daß die
   Einrichtung (14) zur Änderung der Lichtverteilung eine oder
   mehrere Flüssigkristallzellen (FK) umfaßt.

4. Reflektor nach Anspruch 3, dadurch gekennzeichnet, daß die
   Flüssigkristallzelle (FK) im Bereich der Frontscheibe angeordnet ist.

5. Reflektor nach Anspruch 3, dadurch gekennzeichnet, daß die Flüssigkristallzelle (FK) als Frontscheibe (14) ausgebildet ist.

6. Elektronenblitzgerät, gekennzeichnet durch einen Reflektor (10, 12, 14, 16, 18) nach einem der Ansprüche 1 bis 5.

7. Elektronenblitzgerät, dadurch gekennzeichnet, daß die Einrichtung zur Erzeugung der Steuerspannung mit der Brennweite des verwendeten Objektivs (28) gekoppelt ist.

8. Elektronenblitzgerät nach Anspruch 7, insbesondere für Kameras mit Vario-Objektiven, dadurch gekennzeichnet, daß die geometrische Verschiebung bei der Änderung der Entfernungseinstellung auf einen verschiebbaren Mittelabgriff (24) eines Potentiometers (20, 22) übertragen wird, von welchem die Steuerspannung abgegriffen wird.

0020918

STREUCHARAKTERISTIK

Fig. 1

AUSLEUCHTKURVEN

Fig. 2

A1157

Fig. 3

A1157

| **EINSCHLÄGIGE DOKUMENTE** | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | GB - A - 1 451 066 (ASSOCIATED ENGINEERING LTD.) <br> * Seite 3, Zeilen 57-126 * <br> -- <br> US - A - 4 100 590 (EDUARD WAGENSONNER) <br> * Spalte 1, Zeile 27 bis Spalte 2, Zeile 3 * <br> -- | 1-5 <br><br><br> 1,6,8 | G 03 B 15/05 <br> F 21 V 9/10 |
| A | US - A - 4 141 059 (SHOSAKU SHIOJIRI) <br> * Das ganze Dokument * <br> ---- | | RECHERCHIERTE SACHGEBIETE (Int. Cl.³) <br><br> G 03 B 15/05 <br> F 21 V 9/10 <br> G 03 B 15/03 <br> H 01 K 1/32 |
| | | | KATEGORIE DER GENANNTEN DOKUMENTE <br><br> X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument <br> &: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 22-09-1980 | TREVETIN |

EPA form 1503.1 06.78